# EUROPEAN PATENT SPECIFICATION

(11) **EP 2 722 505 B1**
(45) Date of publication and mention of the grant of the patent: **23.03.2016**
(21) Application number: 13185701.3
(22) Date of filing: 24.09.2013
(51) Int. Cl.: F01N 3/20

(54) **Urea injection system for an internal combustion engine**
Harnstoffeinspritzsystem für einen Verbrennungsmotor
Système d'injection d'urée pour moteur à combustion interne

(30) Priority: 17.10.2012 FI 20126077
(43) Date of publication of application: 23.04.2014
(73) Proprietor: Wärtsilä Finland Oy, 65380 Vaasa (FI)
(72) Inventor: Eronen, Olli, 65100 Vaasa (FI); Lundin, Kaj, 65100 Vaasa (FI)
(74) Representative: Berggren Oy Ab

(56) References cited:
- DE-A1-102008 017 280
- FR-A1- 2 879 239
- JP-A- 2005 248 823
- JP-A- 2011 001 895
- US-A1- 2010 122 521

## Description

The invention relates to a urea injection system for an internal combustion engine. The invention also relates to an internal combustion engine, which is provided with a urea injection system.

Selective catalytic reduction (SCR) is a means of converting nitrogen oxides, also referred to as NOₓ with the aid of a catalyst into diatomic nitrogen, N₂, and water, H₂O. A reductant, typically anhydrous ammonia, aqueous ammonia or urea, is added to a stream of exhaust gas and absorbed into a catalyst. Carbon dioxide, CO₂ is a reaction product when urea is used as the reductant. Selective catalytic reduction can be utilized in internal combustion engines, such as large diesel engines and gas turbines.

In internal combustion engines the SCR system comprises an injection nozzle, from which urea is injected into the exhaust duct. During the normal operation, pressure in the urea injection system is higher than in the exhaust duct. When urea injection system is not used, back flow from exhaust duct may clog the injection nozzle and the urea and air lines connected thereto. Clogging is caused by the high exhaust gas pressure and temperature and dirt particles in the exhaust gas flow.

Clogging of the injection nozzle is also problematic when engine have to be stopped suddenly, for example after the emergency stop since urea may crystallize in the injection nozzle and pipes.

US 2010/122521 A1 discloses a method for purging reductant from a reductant supply system. In the method the system is purged by urging reductant from a dispensing device to a reductant source.

JP 2011001895 A discloses an arrangement for purifying exhaust gas of an internal combustion engine using an SCR catalyst and by introducing reducing agent to the upstream side of the SCR catalyst. The pipe supplying the reducing agent to the SCR catalyst can be purged by a device that creates a negative pressure in the pipe and sucks the reducing agent from the pipe.

The object of the present invention is to prevent clogging of the urea in the injection nozzle and urea line.

The object of the invention can be achieved by a urea injection system and an engine according to respective independent claims.

The urea injection system according to the invention comprises an injection nozzle for injecting urea and air into an exhaust duct of the internal combustion engine, a urea inlet connectable to a urea source, a urea line for supplying urea from the urea inlet to the injection nozzle, an air line for supplying air to the injection nozzle, and a purging line for supplying purging air to the urea line, which purging line is provided with a purging valve for controlling the flow of purging air from the purging line to the urea line. The urea line is provided with a valve for allowing and preventing the flow of urea from the urea inlet to the injection nozzle, and the purging line is connected to the urea line between the valve and the injection nozzle to a location that is nearer to the valve than the injection nozzle.

By means of the purging line purging air can be supplied into the urea line and the injection nozzle, when the urea injection is not used. This prevents clogging of the injection nozzle and urea line. Further, purging air can be used to flush the urea line and the injection nozzle, when the engine is stopped. Since the purging line is connected to the urea line between the valve and the injection nozzle close to the valve, the flushing direction in the urea line is towards the injection nozzle. The urea line is thus effectively purged and the urea flows from the urea line into the exhaust duct of the engine.

In the following the invention will be described by way of examples with reference to the accompanying drawings, in which
Fig. 1 shows schematically an internal combustion engine, which is provided with a selective catalytic reduction system.
Fig. 2 shows schematically a urea injection system according to an embodiment of the invention, when urea injection is in use.
Fig. 3 shows the urea injection system of fig. 2 when urea injection is out of use.
Fig. 4 shows schematically a urea injection system according to another embodiment of the invention.
Fig. 5 shows schematically a urea injection system according to still another embodiment of the invention.

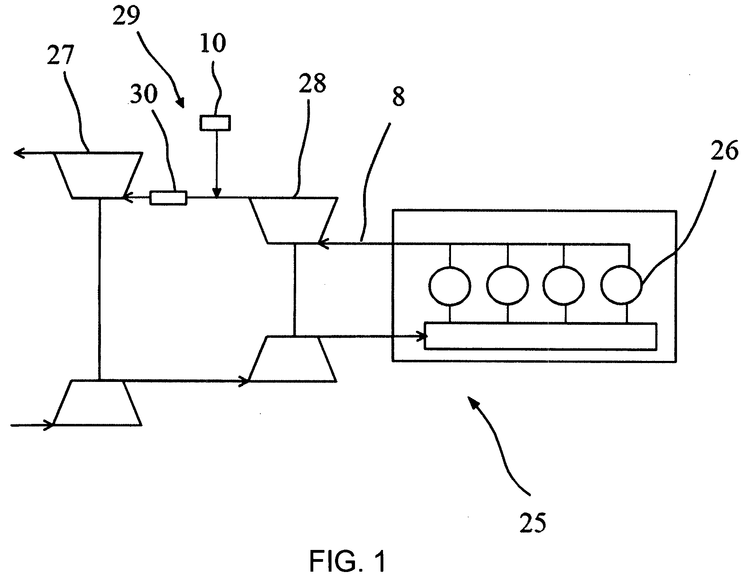

Fig. 1 shows a reciprocating internal combustion engine 25 such as a large diesel engine, which can be used as a main and/or an auxiliary engine in ships and/or in power plants for generation of electricity and/or heat. The engine 25 is a medium speed, four-stroke engine. The maximum rotational speed of the engine is 300-1500 rpm. Cylinders 26 of the engine can be arranged in a single bank or in two banks in a V-configuration. Typically, the engine 25 has 8-20 cylinders. The cylinder bore is typically 10-100 cm.

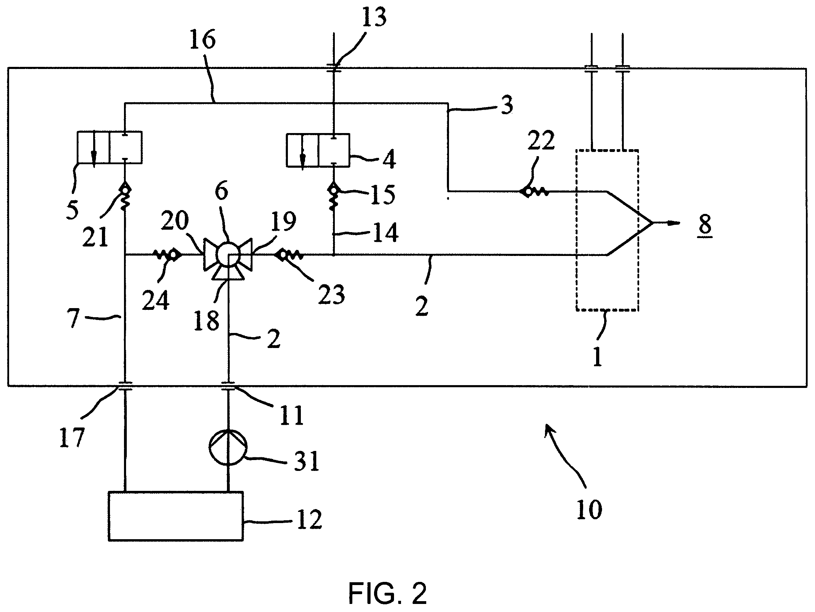

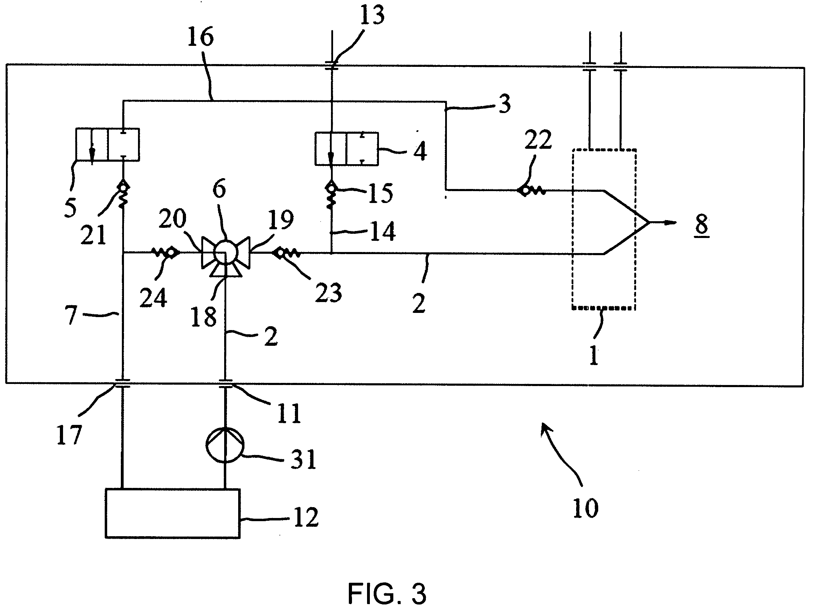

The engine 25 is turbocharged in two stages. Thus, the engine comprises a low-pressure turbocharger 27 and a high-pressure turbocharger 28 connected to an exhaust duct 8 of the engine. The engine is provided with a selective catalytic reduction (SCR) system 29 by which nitrogen oxides in the exhaust gas can be converted into diatomic nitrogen, N₂, and water, H₂O. The SCR system 29 comprises a urea injection system 10 for injecting urea into the exhaust duct 8. The structure and operation of the urea injection system 10 is described in more detail in figs. 2 and 3. The SCR system 29 further comprises a catalyst 30, in which the NOₓ reduction reaction takes place as the exhaust gases pass therethrough. Before entering the catalyst 30, reductant such as urea, is injected and mixed with exhaust gases. The catalyst 30 is arranged in the exhaust duct 8 and the urea injection system 10 is arranged to inject urea into the exhaust duct 8 to a location upstream of the catalyst 30. In the embodiment of fig. 1 the catalyst 30 is arranged between the low and high-pressure turbochargers. The urea injection system 10 is arranged to inject urea into the exhaust duct 8 to a location between the catalyst 30 and the high pressure turbocharger 28 or upstream of the high-pressure turbocharger 28.

Figs. 2 and 3 show in more detail the urea injection system 10 that can be used in the SCR system of fig. 1. The urea injection system 10 comprises an injection nozzle 1 for injecting urea and air into the exhaust duct 8 of the engine. The injection nozzle 1 can be mounted to the wall of the exhaust duct 8. The injection nozzle 1 comprises a mixing chamber (not shown) in which urea and air are mixed with each other before the injection. The injection nozzle 1 is provided with a cooling, for example cooling liquid can be circulated in the injection nozzle 1. The cooling prevents the crystallizing of urea in the injection nozzle 1.

The urea injection system 10 comprises a urea inlet 11 that is connectable to an external urea source 12 such as a urea tank. The urea source 12 is provided with a pump 31 for supplying urea to the urea injection system 10. The system 10 further comprises a urea line 2 for supplying urea from the urea inlet 11 to the injection nozzle 1. The urea line 2 is provided with a valve 6 for allowing and preventing the flow of urea from the urea inlet 11 to the injection nozzle 1. The valve 6 can be a three-way valve. Further, the system 10 comprises an air inlet 13 connected to a source of pressurized air such as a charge air receiver of the engine or other pressurized air system, which, for example, is used to start the engine and to provide actuating energy for safety and control devices. An air line 3 is arranged to supply air from the air inlet 13 to the injection nozzle 1.

The system 10 comprises a purging line 14 for supplying purging air to the urea line 2. The purging line 14 is provided with a purging valve 4 for controlling the flow of purging air from the purging line 14 to the urea line 2. The purging valve 4 is a controllable valve. The purging valve 4 can be actuated, for instance, electrically, pneumatically or hydraulically. The purging valve 4 has a first position and a second position. In the first position the flow of purging air to urea line 2 is prevented and in the second position the flow of purging air to the urea line 2 is allowed. The purging line 14 is also provided with a one-way valve 15 that is installed between the purging valve 4 and the urea line 2. The one-way valve 15 prevents flow of fluid from the urea line 2 toward the purging valve 4. The purging line 14 is connected to the urea line 2 between the valve 6 and the injection nozzle 1. The purging line 14 is connected to the urea line 2 to a location that is nearer to the valve 6 than the injection nozzle 1. One end of the purging line 14 can be connected to the air inlet 13.

The purging line 14 is preferably connected to the urea line 2 at such a location that the distance between the valve 6 of the urea line 2 and the purging line 14 is at most one fourth of the distance between the valve 6 and the injection nozzle 1. The purging direction in the urea line 2 is from the purging line 14 towards the injection nozzle 1. When the urea line 2 is purged, the urea and purging air thus flow to the injection nozzle 1 and further into the exhaust duct 8. This flow direction ensures that the urea line 2 is effectively purged. The closer to the valve 6 the purging line 14 is connected, the better the urea line 2 is emptied.

The urea injection system 10 comprises a urea outlet 17 connectable to the urea source 12 and a recirculation line 7, one end of which is connected to the urea outlet 17 and the other end to the valve 6.

In the embodiment shown in figs. 1 and 2 the valve 6 is a three-way valve, typically an L-type three-way valve. A center port 18 of the valve 6 is in flow connection with the urea inlet 11. The urea line 2 is connected to a first side port 19 and the recirculation line 7 to a second side port 20 of the valve 6. The L-type three-way valve can connect the center port 18 to either side port 19, 20. Additionally, the L-type three-way valve can disconnect all three ports 18-20. The L-type tree-way valve cannot connect the first side port 19 and the second side port 20 together.

The urea injection system 10 further comprises a second purging line 16 for supplying purging air into the recirculation line 7. One end of the second purging line 16 is connected to the recirculation line 7. The other end of the second purging line 16 can be connected to the air inlet 13. The second purging line 16 is provided with a second purging valve 5 for controlling the flow of purging air from the second purging line to the recirculation line 7. Also the second purging valve 5 is a controllable valve, which can be actuated, for instance, electrically, pneumatically or hydraulically. The second purging valve 5 has a first position and a second position. In the first position the flow of purging air to recirculation line 7 is prevented and in the second position the flow of purging air to the recirculation line 7 is allowed. The second purging line 16 is also provided with a second one-way valve 21 that is arranged between the second purging valve 5 and the recirculation line 7. The second one-way valve 21 prevents flow of fluid from the recirculation line 7 toward the second purging line 16.

The urea injection system 10 further comprises a third, fourth and fifth one-way valve. The air line 3 is provided with the third one-way valve 22. The third one-way valve 22 prevents flow of fluid toward the air inlet 13 in the air line 3. In the embodiments of the figures, the third one-way valve 22 is arranged at such a location that flow from the injection nozzle 1 via the air line 3 to the purging duct 14 is prevented. The urea line 2 is provided with the fourth one-way valve 23. The fourth one-way valve 23 prevents flow of fluid toward the valve 6 in the urea line 2. In the embodiments of the figures, the fourth one-way valve 23 is arranged at such a location that the purging line 14 is connected to the urea line 2 between the fourth one-way valve 23 and the injection nozzle 1. The recirculation line 7 is provided with the fifth one-way valve 24. The fifth one-way valve 24 prevents flow of fluid toward the valve 6 in the recirculation line 7.

In fig. 2 the urea injection is in use. The valve 6 is in a position where the center port 18 is connected to the first side port 19 and disconnected from the second side port 20. Urea is supplied from the urea source 12 through the urea inlet 11 and the urea line 2 to injection nozzle 1. Air is supplied from the air source through the air inlet 13 and air line 3 to the injection nozzle 1. Air and urea are mixed with each other in the mixing chamber of the injection nozzle 1, after which the mixture of air and urea is injected into the exhaust duct 8. The purging valve 4 is in the first position and thus prevents the flow of purging air to the urea line 2. The second purging valve 5 is also in the first position and thus prevents the flow of purging air to the recirculation line 7. The recirculation line 7 can be flushed by moving the second purging valve 5 to the second position. Typically, the second purging valve 5 is kept in the second position for a few seconds, after which it is moved back to the first position.

In fig. 3 the urea injection into the exhaust duct is stopped. The valve 6 is moved to a position in which the center port 18 is connected to the second side port 20 and disconnected from the first side port 19. Urea is recirculated from the urea source 12 through the urea inlet 11 and the valve 6 to the recirculation line 7 and back to the urea source 12. The recirculation keeps urea flowing and thus prevents the urea from crystallizing. By means of the urea recirculation, the urea injection can be kept in a stand-by mode and the supply of non-crystallized urea into the exhaust duct can be speeded up when the engine is restarted. Purging air is supplied along the air line 3 to the injection nozzle 1. The purging valve 4 is in the second position and purging air is supplied along the purging line 14 to the urea line 2. Thus purging air flushes the urea line 2. The second purging valve 5 is in the first position.

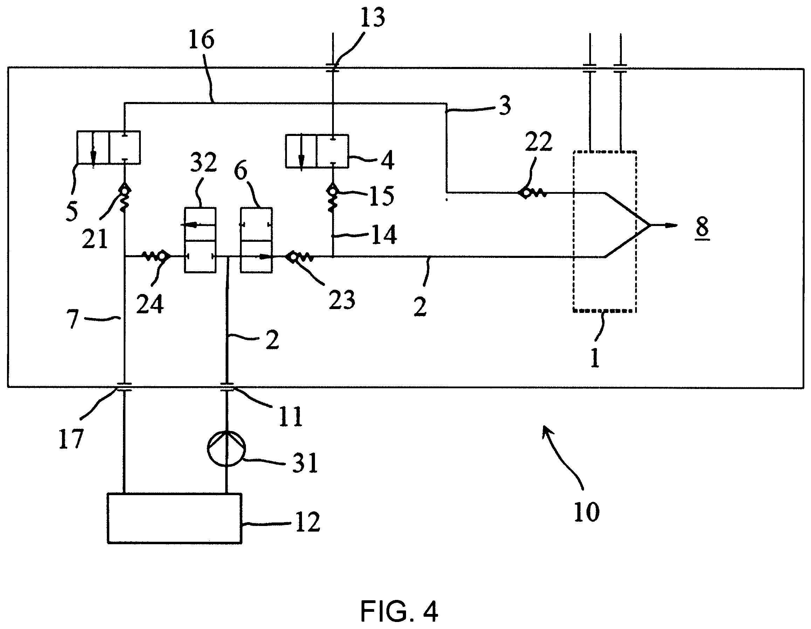

Fig. 4 shows a urea injection system according to another embodiment of the invention. Here, the three-way valve is replaced with two two-way valves. The first two-way valve 6 can be installed to the urea line 2 between the connection with the purging line 14 and the urea inlet 11. The recirculation line 7 is connected to the urea line 2 between the first valve 6 and the urea inlet 11. The second two-way 32 valve is installed to the recirculation line 7. When the urea injection is in use, the first two-way valve 6 is open and the second two-way valve 32 closed. When the urea injection is out of use, the first two-way valve 6 is closed and the second two-way 32 valve open. In this way, urea can be recirculated in the system 10.

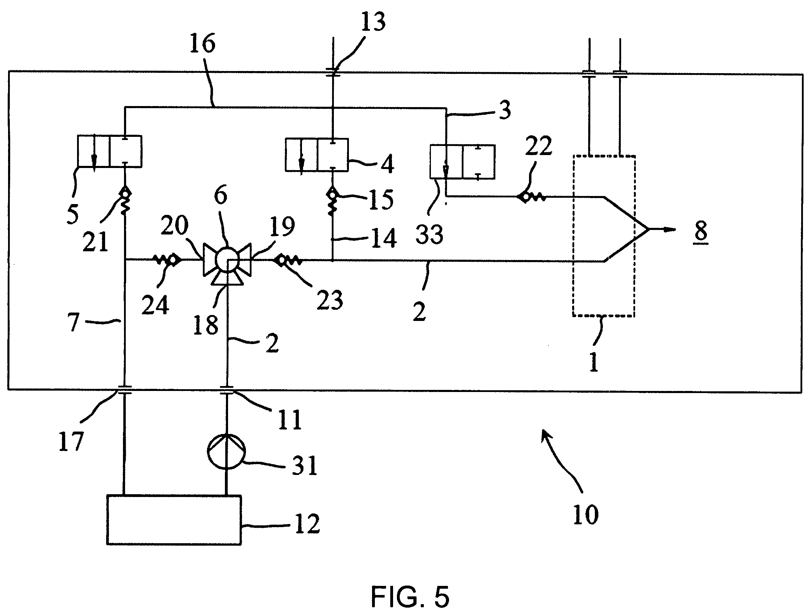

Fig. 5 shows a urea injection system according to still another embodiment of the invention. The embodiment is otherwise identical to the embodiment of fig. 2, but the air line 3 is provided with a control valve 33. The control valve 33 is located between the purging line 14 and the injection nozzle 1. The control valve 33 is also upstream of the third one way valve 22. The control valve 33 is a controllable valve. The control valve 33 can be actuated, for instance, electrically, pneumatically or hydraulically. The control valve 33 has a first position, in which the flow in the air line 3 from the air inlet 13 to the injection nozzle 1 is allowed, and a second position, in which the flow to the injection nozzle 1 is prevented. When the urea injection into the exhaust duct 8 is in use, the control valve 33 is in the first position, as shown in the figure. When the urea line 2 and/or the recirculation line 7 is purged, the control valve 33 can be switched to the second position. Flow from the air inlet 13 to the injection nozzle 1 is thus prevented. All the air from the air inlet 13 thus flows into the purging line 14 and/or the second purging line 16 and the purging effect is improved. Also the urea injection system of fig. 4 could be provided with a control valve 33 for selectively allowing and preventing flow from the air inlet 13 to the injection nozzle 1.

## Claims

1. A urea injection system (10) for an internal combustion engine (25), comprising
- an injection nozzle (1) for injecting urea and air into an exhaust duct (8) of the internal combustion engine (25),
- a urea inlet (11) connectable to a urea source (12),
- a urea line (2) for supplying urea from the urea inlet (11) to the injection nozzle (1),
- an air line (3) for supplying air to the injection nozzle (1), and
- a purging line (14) for supplying purging air to the urea line (2), which purging line (14) is provided with a purging valve (4) for controlling the flow of purging air from the purging line (14) to the urea line (2),
**characterized in that** the urea line (2) is provided with a valve (6) for allowing and preventing the flow of urea from the urea inlet (11) to the injection nozzle (1), and the purging line (14) is connected to the urea line (2) between the valve (6) and the injection nozzle (1), and that the purging line (14) is connected to the urea line (2) to a location that is nearer to the valve (6) than the injection nozzle (1).

2. The urea injection system according to claim 1, **characterized in that** it further comprises a urea outlet (17) connectable to the urea source (12), and a recirculation line (7), one end of which is connected to the urea outlet (17) and the other end to the valve (6) or to the urea line (2) between the urea inlet (11) and the valve (6).

3. The urea injection system according to claim 2, **characterized in that** the valve (6) is a three-way valve having a center port (18), which is in flow connection with the urea inlet (11), a first side port (19) to which the urea line (2) is connected and a second side port (20) to which the recirculation line (7) is connected.

4. The urea injection system according to claim 2, **characterized in that** it further comprises a second purging line (16) for supplying purging air to the recirculation line (7), which second purging line (16) is provided with a second purging valve (5) for controlling the flow of purging air from the second purging line to the recirculation line (7).

5. The urea injection system according to claim 1, **characterized in that** the injection nozzle (1) is provided with cooling.

6. The urea injection system according to any of the previous claims, **characterized in that** the air line (3) is provided with a control valve (33) for selectively allowing and preventing flow in the air line (3), the control valve (33) being located between the purging line (14) and the injection nozzle (1).

7. An internal combustion engine (25), which is provided with a selective catalytic reduction (SCR) system (29), which comprises a catalyst (30) arranged in an exhaust duct (8) of the engine (25), **characterized in that** the selective catalytic reduction system (29) comprises a urea injection system (10) according to any of claims 1-6, which is arranged to inject urea into the exhaust duct (8) to a location upstream of the catalyst (30).

8. The internal combustion engine according to claim 7, **characterized in that** the engine (25) comprises a low pressure turbocharger (27) and a high pressure turbocharger (28) connected to the exhaust duct (8), and that the catalyst (30) is arranged in the exhaust duct (8) between said turbochargers (27, 28).

9. The internal combustion engine according to claim 8, **characterized in that** the urea injection system (10) is arranged to inject urea into the exhaust duct (8) to a location between the catalyst (30) and the high pressure turbocharger (28) or upstream of the high pressure turbocharger (28).

## Patentansprüche

1. Harnstoff-Einspritzsystem (10) für eine Verbrennungskraftmaschine (25), das Folgendes umfasst:
- eine Einspritzdüse (1) zum Einspritzen von Harnstoff und Luft in eine Abgasleitung (8) der Verbrennungskraftmaschine (25),
- einen Harnstoffeinlass (11), der mit einer Harnstoffquelle (12) verbunden werden kann,
- eine Harnstoffleitung (2) zum Zuführen von Harnstoff von dem Harnstoffeinlass (11) zu der Einspritzdüse (1),
- eine Luftleitung (3) zum Zuführen von Luft zu der Einspritzdüse (1) und
- eine Spülleitung (14) zum Zuführen von Spülluft zu der Harnstoffleitung (2), wobei die Spülleitung (14) mit einem Spülventil (4) zum Regeln des Stroms von Spülluft von der Spülleitung (14) zu der Harnstoffleitung (2) versehen ist,
**dadurch gekennzeichnet, dass** die Harnstoffleitung (2) mit einem Ventil (6) versehen ist, um den Strom von Harnstoff von dem Harnstoffeinlass (11) zu der Einspritzdüse (1) zu ermöglichen und zu verhindern, und die Spülleitung (14) zwischen dem Ventil (6) und der Einspritzdüse (1) mit der Harnstoffleitung (2) verbunden ist und dass die Spülleitung (14) an einer Position, die dem Ventil (6) näher ist als der Einspritzdüse (1), mit der Harnstoffleitung (2) verbunden ist.

2. Harnstoff-Einspritzsystem nach Anspruch 1, **dadurch gekennzeichnet, dass** es ferner einen Harnstoffauslass (17), der mit der Harnstoffquelle (12) verbunden werden kann, und eine Rückführungsleitung (7), deren eines Ende mit dem Harnstoffauslass (17) und deren anderes Ende mit dem Ventil (6) oder mit der Harnstoffleitung (2) zwischen dem Harnstoffeinlass (11) und dem Ventil (6) verbunden ist, umfasst.

3. Harnstoff-Einspritzsystem nach Anspruch 2, **dadurch gekennzeichnet, dass** das Ventil (6) ein Dreiwegeventil ist, das einen mittleren Anschluss (18), der in Strömungsverbindung mit dem Harnstoffeinlass (11) steht, einen ersten seitlichen Anschluss (19), mit dem die Harnstoffleitung (2) verbunden ist, und einen zweiten seitlichen Anschluss (20), mit dem die Rückführungsleitung (7) verbunden ist, aufweist.

4. Harnstoff-Einspritzsystem nach Anspruch 2, **dadurch gekennzeichnet, dass** es ferner eine zweite Spülleitung (16) zum Zuführen von Spülluft zu der Rückführungsleitung (7) umfasst, wobei die zweite Spülleitung (16) mit einem zweiten Spülventil (5) zum Regeln des Stroms von Spülluft von der zweiten Spülleitung zu der Rückführungsleitung (7) versehen ist.

5. Harnstoff-Einspritzsystem nach Anspruch 1, **dadurch gekennzeichnet, dass** die Einspritzdüse (1) mit Kühlung versehen ist.

6. Harnstoff-Einspritzsystem nach einem der vorhergehenden Ansprüche, **dadurch gekennzeichnet, dass** die Luftleitung (3) mit einem Regelventil (33) versehen ist, um selektiv den Strom in der Luftleitung (3) zu ermöglichen und zu verhindern, wobei das Regelventil (33) zwischen der Spülleitung (14) und der Einspritzdüse (1) angeordnet ist.

7. Verbrennungskraftmaschine (25), die mit einem System zur selektiven katalytischen Reduktion (selective catalytic reduction - SCR) (29) versehen ist, das einen Katalysator (30) umfasst, der in einer Abgasleitung (8) der Verbrennungskraftmaschine (25) angeordnet ist, **dadurch gekennzeichnet, dass** das System zur selektiven katalytischen Reduktion (29) ein Harnstoff-Einspritzsystem (10) nach einem der Ansprüche 1 - 6 umfasst, das dafür angeordnet ist, Harnstoff in die Abgasleitung (8) an einen Ort, stromaufwärts von dem Katalysator (30), einzuspritzen.

8. Verbrennungskraftmaschine nach Anspruch 7, **dadurch gekennzeichnet, dass** die Kraftmaschine (25) einen Niederdruck-Turbolader (27) und einen Hochdruck-Turbolader (28), die mit der Abgasleitung (8) verbunden sind, umfasst und dass der Katalysator (30) in der Abgasleitung (8) zwischen den Turboladern (27, 28) angeordnet ist.

9. Verbrennungskraftmaschine nach Anspruch 8, **dadurch gekennzeichnet, dass** das Harnstoff-Einspritzsystem (10) dafür angeordnet ist, Harnstoff in die Abgasleitung (8) an einen Ort, zwischen dem Katalysator (30) und dem Hochdruck-Turbolader (28) oder stromaufwärts von dem Hochdruck-Turbolader (28), einzuspritzen.

## Revendications

1. Système d'injection d'urée (10) pour un moteur à combustion interne (25), comprenant
- une buse d'injection (1) pour injecter de l'urée et de l'air dans un conduit d'échappement (8) du moteur à combustion interne (25),
- une arrivée d'urée (11) raccordable à une source d'urée (12),
- un conduit d'urée (2) pour fournir de l'urée de l'arrivée de l'urée (11) à la buse d'injection (1) ,
- une conduite d'air (3) pour fournir de l'air à la buse d'injection (1), et
- une conduite de purge (14) pour fournir de l'air de purge au conduit d'urée (2), laquelle conduite de purge (14) est dotée d'une soupape de purge (4) pour contrôler le débit de l'air de purge de la conduite de purge (14) au conduit d'urée (2),
**caractérisé en ce que** le conduit d'urée (2) est doté d'une soupape (6) pour permettre et éviter le débit d'urée de l'arrivée de l'urée (11) à la buse d'injection (1) et la conduite de purge (14) est raccordée au conduit d'urée (2) entre la soupape (6) et la buse d'injection (1) et **en ce que** la conduite de purge (14) est raccordée au conduit d'urée (2) à un endroit qui est plus près de la soupape (6) que la buse d'injection (1).

2. Système d'injection d'urée selon la revendication 1, **caractérisé en ce qu'**il comprend en plus une sortie d'urée (17) raccordable à la source d'urée (12) et un conduit de recirculation (7), dont une extrémité est raccordée à la sortie d'urée (17) et l'autre extrémité à la soupape (6) ou au conduit d'urée (2) entre l'arrivée d'urée (11) et la soupape (6).

3. Système d'injection d'urée selon la revendication 2, **caractérisé en ce que** la soupape (6) est une soupape à trois voies ayant un orifice central (18) qui est en raccord d'écoulement avec l'arrivée d'urée (11), un premier orifice latéral (19) auquel le conduit d'urée (2) est raccordé et un deuxième orifice latéral (20) auquel le conduit de recirculation (7) est raccordé.

4. Système d'injection d'urée selon la revendication 2, **caractérisé en ce qu'**il comprend en plus une deuxième conduite de purge (16) pour fournir de l'air de purge au ²conduit de recirculation (7), lequel deuxième conduit de purge (16) est doté d'une deuxième soupape de purge (5) pour contrôler le débit d'air de purge du deuxième conduit de purge au conduit de recirculation (7) .

5. Système d'injection d'urée selon la revendication 1, **caractérisé en ce que** la buse d'injection (1) est dotée d'un refroidissement.

6. Système d'injection d'urée selon l'une quelconque des revendications précédentes, **caractérisé en ce que** la conduite d'air (3) est dotée d'une soupape de commande (33) pour permettre et empêcher de façon sélective l'écoulement dans la conduite d'air (3), la soupape de commande (33) étant située entre la conduite de purge (14) et la buse d'injection (1).

7. Moteur à combustion interne (25) qui est doté d'un système de réduction catalytique sélective (RCS) (29) qui comprend un catalyseur (30) agencé dans un conduit d'échappement (8) du moteur (25), **caractérisé en ce que** le système de réduction catalytiquze sélective (29) comprend un système d'injection d'urée (10) selon l'une quelconque des revendications 1 - 6 qui est agencé pour injecter de l'urée dans le conduit d'échappement (8) à un endroit en amont du catalyseur (30) .

8. Moteur à combustion interne selon la revendication 7, **caractérisé en ce que** le moteur (25) comprend un turbocompresseur à basse pression (27) et un turbocompresseur à haute pression (28) raccordés au conduit d'échappement (8) et **en ce que** le catalyseur (30) est agencé dans le conduit d'échappement (8) entre lesdits turbocompresseurs (27,28).

9. Moteur à combustion interne selon la revendication 8, **caractérisé en ce que** le système d'injection d'urée (10) est agencé pour injecter de l'urée dans le conduit d'échappement (8) à un endroit situé entre le catalyseur (30) et le turbocompresseur à haute pression (28) ou en amont du turbocompresseur à haute pression (28).
